# EUROPEAN PATENT APPLICATION

(11) **EP 1 225 391 A2**
(43) Date of publication of application: **24.07.2002**
(21) Application number: 01129114.3
(22) Date of filing: 07.12.2001
(51) Int. Cl.: F21V 19/00, F21V 23/02

(54) **Lamp holder comprising lamp socket, ballast, and fastening mechanism, and lighting kit containing said lamp holder**

(30) Priority: 19.01.2001 CN 01201013 U
(71) Applicant: SHANGHAI VIVA ECO ELECTRONICS & TECHNOLOGY CO., LTD., Pudong Shanghai, 200120 (CN)
(72) Inventor: Chen, Chun Tsun, Rongcheng Rd., Pudong, Shanghai (CN)
(74) Representative: Grünecker, Kinkeldey, Stockmair & Schwanhäusser Anwaltssozietät

(57) **Abstract**

A lamp holder includes, a hollow main body (10); a ballast circuit (20) disposed in said hollow main body (10); a socket (11) for holding a compact fluorescent lamp (60) on to said hollow main body (10); and a fastening mechanism (12,12',13,14,14',16,19) for non-electrically fastening said hollow main body to a lighting fixture, wall, or ceiling, wherein said ballast circuit (20) is electrically connected with electrodes (12) of said compact fluorescent lamp (60) when said compact fluorescent lamp (60) is held on by said socket (11).

## Description

### FIELD OF THE INVENTION

The present invention relates generally to a lighting fixture, and more particularly to a lamp holder comprising a lamp socket, a ballast circuit, and a mechanism for fastening the lamp holder to a lighting fixture, wall or ceiling.

### BACKGROUND OF THE INVENTION

The self-ballasted compact fluorescent lamp is widely used by virtue of its energy efficiency and is intended to replace the incandescent lamp. In light of the self-ballasted compact fluorescent lamp and the incandescent lamp being compatible in terms of lamp base, they are often used interchangeably as a matter of convenience. As a result of the interchangeable use of the self-ballasted compact fluorescent lamp and the incandescent lamp, the intended advantage of the energy efficiency of the self-ballasted compact fluorescent lamp is thus canceled out. Furthermore, the compact fluorescent lamp of the self-ballasted compact fluorescent lamp has a working life which is significantly shorter than the ballast circuit of the self-ballasted compact fluorescent lamp. It is a waste to throw away the good ballast circuit together with the out-of-function lamp. Another conventional compact fluorescent lamp is so called PL lamp, which is activated to give off fluorescent light in a lamp socket with a ballast which is separately arranged from the socket. The separation of the ballast from the lamp socket results in not only an increase in volume, but also the number of mounting sites, thereby making it difficult to incorporate the PL lamp into the lighting fixtures such as a floor lamp, ceiling lamp, wall sconce and outdoor lantern, and thus is not cost-effective and design-friendly.

US patent No. 5,577,835 discloses a PL lamp holder including a holder shell coupled with a base, a holder mount detachably fastened to the holder shell by hooks to hold down a starter circuit and having a crossed slot and a fuse mounted on a partition plate in the crossed slot, a holder body detachably fastened to the holder mount through a swivel joint to hold a capacitor, which is electrically connected to the starter circuit when the holder body and the holder mount are firmly fastened together.

US patent No. 5,971,564 discloses a PL lamp holder which comprises a holder shell, a holder body, and a holder mount for connecting the holder shell to the holder body. The holder shell is formed of a conically shaped body, the holder body has a PL lamp on an upper portion of a cylindrical body and a lower portion formed of an annular wall extending downwardly therefrom, and the holder mount comprises a short barrel having a lower barrel wall and a pot having an annular upward wall with an outward flange connected to the inner surface of the barrel and forming a narrow annular groove.

The lamp holders disclosed in the above-mentioned two US patents are adapted to be screwed into the conventional incandescent lamp socket. Therefore, these lamp holders have the same problem as the self-ballasted compact fluorescent lamp, which is the incandescent lamp and the lamp holders are often used interchangeable in the same lighting fixture as a matter of convenience. Further, these lamp holders have a metal base as the incandescent lamp, and thus they are not suitable for outdoor use, because water can easily migrates into the gap between the metal base and the lamp socket. A water-proof case or housing is required for a outdoor lantern using these lamp holders to prevent a short circuit from occurring.

### SUMMARY OF THE INVENTION

An objective of the present invention is to provide a lamp holder comprising a ballast circuit, a fluorescent lamp socket, and a mechanism for non-electrically fastening the lamp holder to a lighting fixture.

Another objective of the present invention is to provide a lighting kit comprising a compact fluorescent lamp; and a lamp holder comprising a ballast circuit, a fluorescent lamp socket, and a mechanism for non-electrically fastening the lamp holder to a lighting fixture.

In order to accomplish the aforesaid objectives a lamp holder constructed according to the present invention comprises a hollow main body; a ballast circuit disposed in said hollow main body; a socket for holding a compact fluorescent lamp on to said hollow main body; and a fastening mechanism for non-electrically fastening said hollow main body to a lighting fixture, wall, or ceiling, wherein said ballast circuit is electrically connected with electrodes of said compact fluorescent lamp when said compact fluorescent lamp is held on by said socket.

Preferably, said socket is disposed in one end of said main body, and said fastening mechanism comprises an annular protrusion extending from another end of said main body, and an axial hole provided at a center of said annular protrusion; wherein said annular protrusion is adapted to be received in a supporting stem of said lighting fixture or said axial hole is adapted to receive said supporting stem of said lighting fixture.

Preferably, said axial hole is a threaded hole.

Preferably, said hollow main body comprises a cylindrical construction, and said socket comprises a hollow columnar body disposed at one end of said cylindrical construction, so that an annular offset is formed at an interface between said cylindrical construction and said hollow columnar body of said socket; wherein said hollow columnar body is provided with a plurality of threads on its outer surface; whereby a shade or a shield of said lighting fixture are mounted to said annular offset or to said plurality of threads. Said fastening mechanism comprises said annular protrusion which is extending coaxially from another end of said cylindrical construction of said main body, and said axial hole. Alternatively, said fastening mechanism comprises said annular offset and said plurality of threads.

Preferably, said hollow main body comprises a first cylindrical construction, and said socket comprises a second cylindrical construction disposed at one end of said first cylindrical construction; wherein said second cylindrical construction has a diameter smaller than that of said first cylindrical construction, so that an annular offset is formed at an interface between said first and second cylindrical constructions; wherein said fastening mechanism comprises a plurality of lugs extending radially from periphery of another end of said first cylindrical construction, and a through hole provided at each one of said plurality of lugs for receiving a screw to be threaded into a wall or ceiling.

Preferably, said hollow main body comprises a cylindrical construction, and said fastening mechanism comprises a plurality of threads formed on an outer surface of said cylindrical construction of said main body, which are adapted to be threadably connected to said lighting fixture.

Preferably, said hollow main body is provided with a smooth back surface to facilitate an attachment of said main body to a wall or ceiling, wherein said fastening mechanism comprises one or more fastening pieces which are extended from an edge or edges of said back surface of said main body such that said fastening pieces are parallel to said back surface, wherein each one of said one or more fastening pieces are provided with a mounting opening.

Preferably, said hollow main body is of a square shape; wherein said socket is disposed in one side of said square main body; wherein said fastening mechanism comprises a locating body which is disposed in a top of said square main body and is provided with a locating hole perpendicular to the top of said square main body, said fastening mechanism further comprising a fastening screw which is movably fastened with said locating body such that said fastening screw is parallel to the top of said square main body, and that said fastening screw can be driven to move into and out of said locating hole.

Preferably, said hollow main body is a flat square body; wherein said socket is disposed in an underside of said flat square main body; wherein said fastening mechanism comprises a locating hole which is disposed in a top of said flat square main body.

Preferably, said ballast circuit further comprises a power source switch for connecting or disconnecting said ballast circuit with a power source.

Preferably, socket comprises an aperture for receiving a protrusion body on a base of said compact fluorescent lamp and a locking means for engaging with a cooperative locking means of said compact fluorescent lamp. More preferably, the locking means comprises bushing electrodes connected to said ballast circuit and mounted in holes provided adjacent to said aperture of said socket, wherein said bushing electrodes are adapted to be plugged by pin electrodes formed on the base of the compact fluorescent lamp.

Preferably, said main body comprises a cylindrical construction, and said socket comprises: a pair of grooves provided on one end of said cylindrical construction for receiving a pair of pin electrodes of said compact fluorescent lamp, wherein said pair of grooves are in the form of two separate circumferential sections of a circle co-axial with said cylindrical construction of said main body; two receiving channels provided on a circumference of said one end of said cylindrical construction for receiving a pair of projections of said compact fluorescent lamp; and two blocking members adjacent to said two receiving channels, so that said two receiving channels are partially blocked by said two blocking members to form two accesses in the longitudinal direction at said one end of said cylindrical construction, wherein said two accesses are opposite to each other, and each of the receiving channels has a portion thereof extending clockwise from the respective access, so that said pair of pin electrodes of said compact fluorescent lamp are able to be received in said pair of grooves, and said pair of projections of said compact fluorescent lamp are able to be received in said two receiving channels through said two accesses at the same time, then said compact fluorescent lamp is able to be rotated to a position where said pair of projections are locked by said two blocking members axially.

Preferably, said main body comprises a cylindrical construction, and said socket comprises two receiving channels provided on a circumference of one end of said cylindrical construction; two blocking members adjacent to said two receiving channels, so that said two receiving channels are partially blocked by said two blocking members to form two accesses in the longitudinal direction, wherein said two accesses are opposite to each other, and each of the receiving channels has a portion thereof extending clockwise from the respective access, and stops at a wall; and a slot formed on the wall of the respective receiving channel for receiving a respective electrode of compact fluorescent lamp.

The present invention also provides a lighting kit comprising the lamp holder of the present invention and a compact fluorescent lamp is able to be held onto said main body by said socket, wherein said ballast circuit is electrically connected with electrodes of said compact fluorescent lamp when said compact fluorescent lamp is held on by said socket. Preferably, said compact fluorescent lamp comprises a base, a protrusion body on said base, and a cooperative locking means; said socket comprises an aperture for receiving said protrusion body of said compact fluorescent lamp and a locking means for engaging with said cooperative locking means of said compact fluorescent lamp. More preferably, said locking means of the lamp holder comprises bushing electrodes connected to said ballast circuit and mounted in holes provided adjacent to said aperture of said socket, and said cooperative locking means of said compact fluorescent lamp comprises pin electrodes formed on the base of said compact fluorescent lamp, wherein said bushing electrodes are adapted to be plugged by said ping electrodes.

Preferably, said compact fluorescent lamp of said lighting kit comprises an annular upright wall surrounding said base of said compact fluorescent lamp, and said annular upright wall has an inside diameter slightly greater than that of said one end of said cylindrical construction of said main body, wherein a pair of projections are provided on said annular upright wall of said compact fluorescent lamp and opposite to each other, and said pair of projections do not contact said base, so that there are two gaps between said pair of projections and said base of said compact fluorescent lamp for said two blocking members of said socket to pass through.

Preferably, said compact fluorescent lamp of said lighting kit of the present invention comprises a base, an annular upright wall surrounding said base, and a pair of electrodes on said annular upright wall, wherein said annular upright wall has an inside diameter slightly greater than that of said one end of said cylindrical construction of said main body; each of said pair of electrodes comprises an arcuate piece below said base and extending counterclockwise, wherein there are a distance between the arcuate piece and the base, and a gap between the arcuate piece and annular upright wall of the compact fluorescent lamp, wherein said arcuate pieces of said pair of electrodes are adapted to be received in said two receiving channels through said two accesses of said socket, so that said compact fluorescent lamp is able to be rotated clockwise to a position where the arcuate pieces of said pair of electrodes are received in said slots of said two receiving channels, whereby said compact fluorescent lamp is locked onto said socket.

The present invention will be elucidated by the following nonrestrictive embodiments with reference to the accompanying drawings.

### BRIEF DESCRIPTION OF THE DRAWINGS

FIG. 1 shows a side schematic view of a lamp holder constructed according to a first preferred embodiment of the present invention, which is adapted to the table lamp, the floor lamp, the pendant lamp and the outdoor lantern.
FIG. 2 shows a top perspective view of the lamp holder shown in FIG. 1 with a bushing electrode 12 thereof being separated therefrom.
FIG. 3 shows a bottom perspective view of the lamp holder shown in FIG. 1.
FIG. 4 shows an exploded perspective view of a lighting kit containing the lamp holder shown in FIG. 1.
FIGS. 5, 5A and 5B show a top perspective view, front plan view and top plan view of a lamp holder constructed according to a second embodiment of the present invention, respectively, which is adapted to the wall sconces.
FIG. 6 shows a top perspective view of a lamp holder constructed according to a third embodiment of the present invention, which is adapted to the flush mount ceiling lamp.
FIG. 7 shows a top perspective view of a lamp holder constructed according to a fourth embodiment the present invention which is adapted to recessed can ceiling lamp.
FIG. 8 shows a top perspective view of a lamp holder constructed according to a fifth embodiment of the present invention comprising a power source switch.
FIG. 9 shows a top perspective view of a lamp holder constructed according to a sixth embodiment of the present invention, which is similar to the first embodiment shown in FIGs. 1-4.
FIG. 10 shows a top perspective view of a lamp holder constructed according to a seventh embodiment of the present invention, which is similar to the first embodiment shown in FIGs. 1-4.
FIG. 11 shows a top perspective view of a lamp holder constructed according to an eighth embodiment of the present invention.
FIG. 12 shows a top perspective view of a lamp holder constructed according to a ninth embodiment of the present invention, which is adapted to a vanity fixture.
FIG. 13 and FIG. 13A show a top perspective view and front plan view of a lamp holder constructed according to a tenth embodiment of the present invention, wherein a pull chain 22 is provided to control the on/off switch.
FIG. 14 shows a perspective view of a lighting kit constructed according to an eleventh embodiment of the present invention, which contains a twist-and-lock structure.
FIG. 15 shows a perspective view of a lighting kit constructed according to a twelfth embodiment of the present invention, which contains a twist-and-lock structure.

### DETAILED DESCRIPTION OF THE PREFERRED EMBODIMENTS

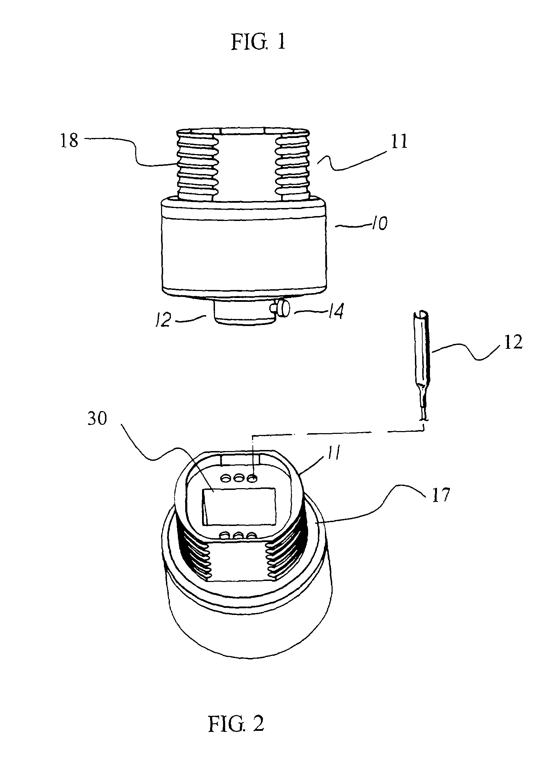

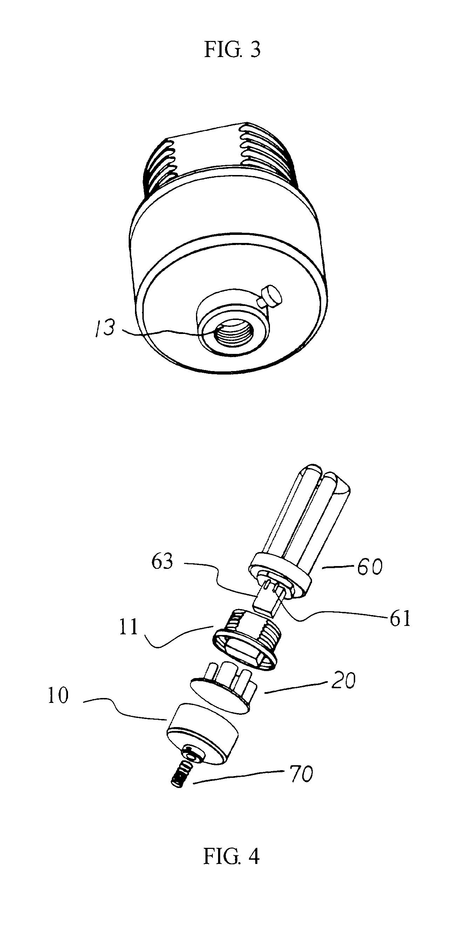

As shown in FIGs. 1-4, a lamp holder constructed according to a first preferred example of the present invention comprises a hollow cylindrical main body 10; and a ballast circuit 20 which is enclosed in the main body 10; and a lamp socket 11 mounted to the top of the main body 10, which has a substantially cylindrical body with two cut-off surfaces and smaller in diameter than the main body 10. The lamp socket 11 is designed to receive a compact fluorescent lamp 60. The main body 10 is provided with an annular protrusion 12 extending coaxially from the bottom end thereof. The annular protrusion 12 is provided in the center with an axial threaded hole 13, and a fastening screw 14 which is movably fastened with the annular protrusion 12 in a radial direction such that the fastening screw 14 can be driven to move into and out of the axial threaded hole 13. The lamp holder of this first preferred embodiment is adapted to the table lamp, the floor lamp, the pendant lamp and the outdoor lantern such that the threaded hole 13 is engaged with a threaded support stem 70 of the table lamp, the floor lamp, the pendant lamp or the outdoor lantern in conjunction with or without the fastening screw 14. The threaded hole 13 also provides access of electrical wires (not shown in the drawings) for connecting the ballast circuit 20 to a power source. Alternatively, the protrusion 12 is fitted into the top of a hollow post of the lighting fixture, and then the fastening screw 14 is used to secure the connection of the post and the protrusion 12.

The lamp socket 11 of the lamp holder is provided with a plurality of threads 18 on its outer surface. Further, an annular offset 18 is also provided near the joint of the main body 10 and the socket 11. A shade or a shield of the lighting fixture can be rested on the annular offset 18 and fastened to the lamp holder with a bolt threaded on the threads 18, or fastened between two bolts threaded on the threads 18 in sequence.

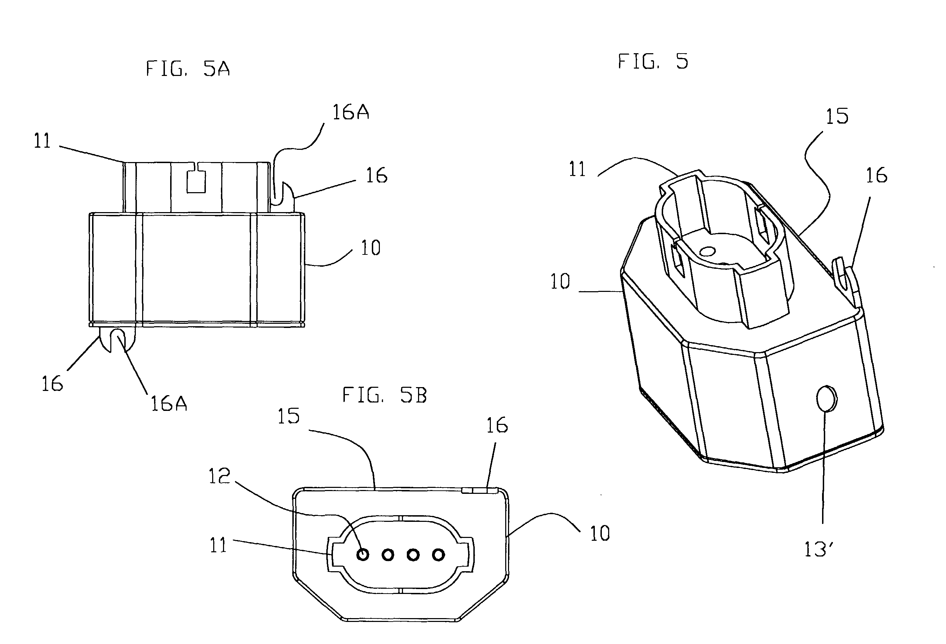

The compact fluorescent lamp 60 is fitted into the lamp socket 11 to become electrically connected with the ballast circuit 20 by means of a plug-in device. The plug-in device comprises two pairs of pin electrodes 61 formed at the base of the compact fluorescent lamp 60 (only one pair shown in FIG. 4) and two pairs of bushing electrodes 12 connected to the ballast circuit 20 and mounted inside the four round holes on the top of the socket 11. An additional locking means may be provided to assure the connection between the compact fluorescent lamp 60 and the socket 11, for example, which may comprise a rectangular aperture 30 provided in said socket 11, recesses (not shown in the drawings) formed on two opposing walls inside the rectangular aperture 30, a rectangular body 63 formed at the base of said compact fluorescent lamp 60, and two cooperative teeth (not shown in the drawings) protruding from two opposite surfaces of the rectangular body 63.

As shown in FIGs. 5, 5A and 5B, a lamp holder constructed according to a second preferred embodiment of the present invention is of a polygonal construction 10 provided with a smooth back surface 15. In this embodiment the socket 11 is disposed on the top of the polygonal construction with four bushing electrodes 12 mounted inside four holes located on the top of polygonal construction. The four bushing electrodes 12 are electrically connected to a ballast circuit (not shown in the drawings) inside the polygonal construction 10. The smooth back surface 15 is provided with two fastening pieces 16 extending from a top edge and bottom edge of the back surface 15 such that the fastening pieces 16 are substantially parallel to the back surface 15. Each of the fastening pieces 16 is provided with a locating opening 16A for receiving a fastening screw to be threaded in a direction perpendicular to the back surface. A hole 13' is provided at one side of main body 10, in which two bushing terminals electrically connected to the ballast circuit are provided for receiving two electrical wires (not shown in the drawings). This lamp holder of the present invention is adapted to the wall sconces by attaching the back surface 15 to the wall.

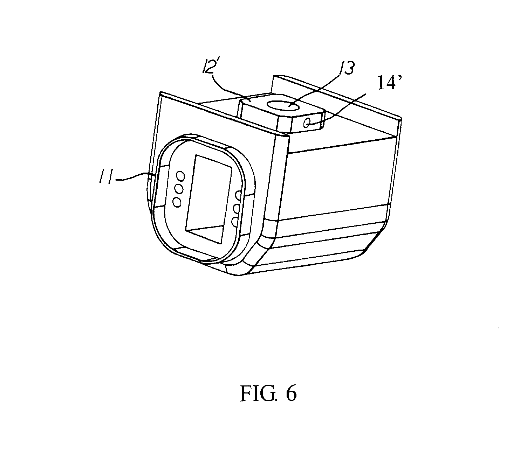

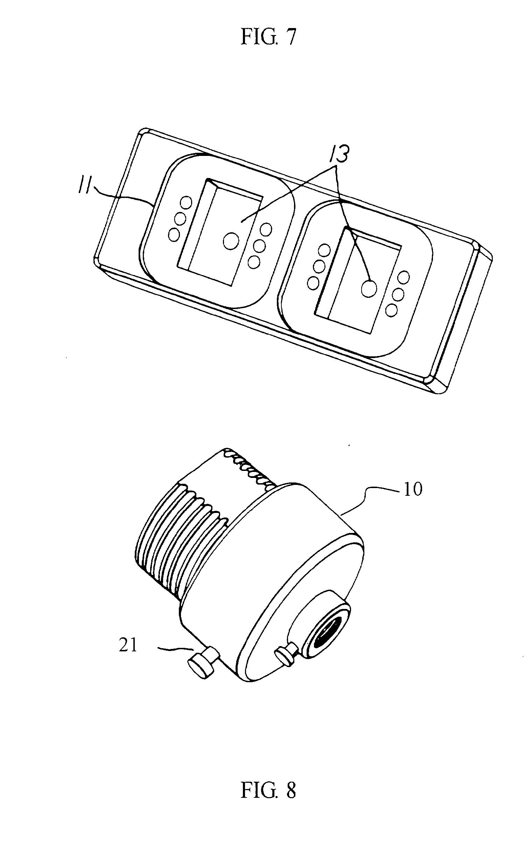

As shown in FIGS. 6 and 7, lamp holders constructed according to a third and fourth preferred embodiments of the present invention have hollow main bodies of a rectangular profile. The lamp holder shown in FIG. 6 is adapted to the flush mount ceiling lamp, which is provided in one side with a lamp socket 11, and in the top with a locating body 12' which is in turn provided with a locating hole 13 perpendicular to the top, and a threaded hole 14' parallel to the top and penetrating the locating body 12' for engaging a fastening screw (not shown in the drawing.) The lamp holder shown in FIG. 7 is adapted to the recessed can ceiling lamp, which is provided in the underside with two lamp sockets 11 which are in turn provided therein and on the top side of the rectangular body with a locating hole 13 for engaging a fastening screw.

As shown in FIG. 8, a lamp holder constructed according to a fifth embodiment of the present invention is similar in construction to the lamp holder shown in FIGs. 1-4, with the difference being that the former comprises a switch which is provided internally in the ballast circuit, and a knob 21 protruding from the main body 10 to control the on/off of the switch.

As shown in FIG. 9, a lamp holder constructed according to a sixth embodiment of the present invention is similar in construction to the lamp holder shown in FIGs. 1-4, with the differences being that the former comprises a dome-shape main body 10 and does not have the fastening screw 14, so that the lamp holder of this embodiment is more suitable to be mounted inside a housing of a lighting fixture having a limited space for mounting the lamp socket, for examples ceiling fan lighting kits and the outdoor lantern.

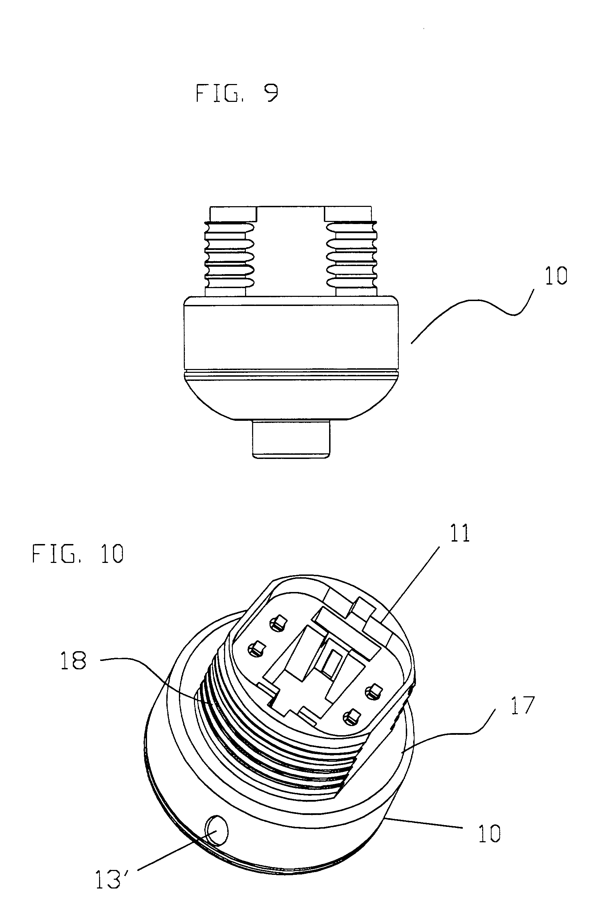

As shown in FIG. 10, a lamp holder constructed according to a seventh embodiment of the present invention is similar in construction to the lamp holder shown in FIGs. 1-4, with the differences being that the former does not have the protrusion 12, the threaded hole 13 and the fastening screw 14, but contains a hole 13' at the cylindrical surface of the main body 10, in which two bushing terminals electrically connected to the ballast circuit are provided for receiving two electrical wires (not shown in the drawings.) The lamp holder of this embodiment is adapted to the recessed can ceiling lamp. The ceiling lamp has a reflective cone (not shown in the drawings) having a smaller opening at the top and a larger opening at the bottom thereof, and the periphery of the larger opening is fixedly connected to a ceiling so that the reflective cone is on top of the ceiling. The socket 11 is then inserted into the smaller opening of the reflective cone with the annular offset 17 between the socket 11 and the main body 10 of the lamp holder resting on the periphery of the smaller opening. A bolt or the like is threaded onto the threads 18 on the socket 11 to fasten the lamp holder with the reflective cone.

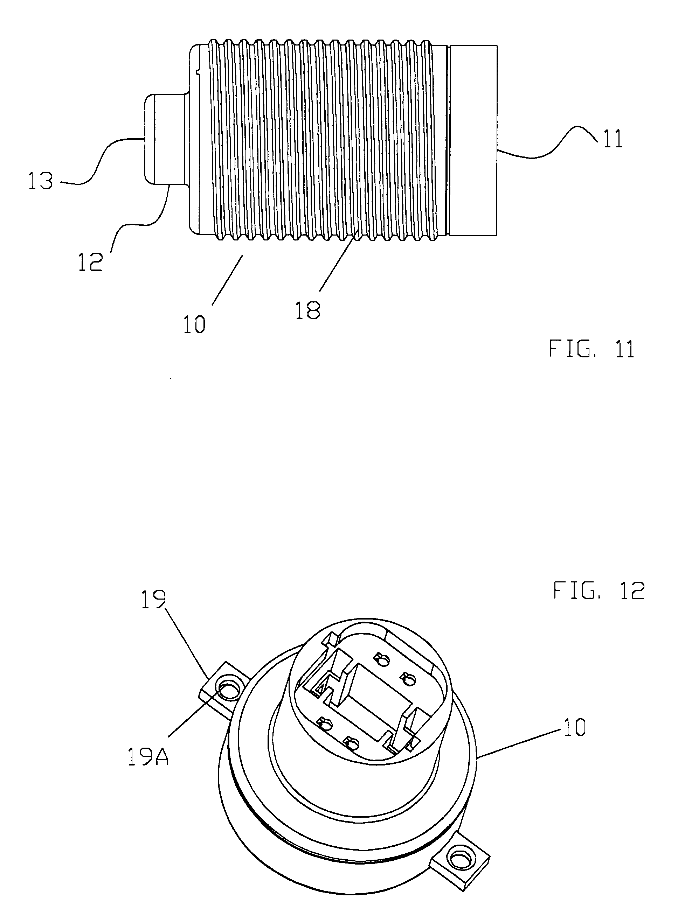

A lamp holder constructed according to an eighth embodiment of the present invention is shown in FIG. 11, wherein the hollow main body 10 is of a cylindrical construction, and the socket 11 is disposed in one end of said cylindrical construction of said main body 10. A plurality of threads 18 are formed on an outer surface of said cylindrical construction of said main body 10, so that the lamp holder can be threadably engaged with a post and/or a housing of a lighting fixture. The lamp holder of this embodiment further comprises an annular protrusion 12 extending coaxially from another end of said cylindrical construction of said main body 10, and an axial hole 13 provided in a center of said annular protrusion 12 similar to those shown in FIG. 1 or FIG. 9.

As shown in FIG. 12, a lamp holder constructed according to a ninth embodiment of the present invention is similar in construction to the lamp holder shown in FIG. 10, with two major differences being that the former does not have the threads 18, and the former comprises two lugs 19 extending radially from periphery of the bottom end of the main body 10. Further a through hole 19A is provided at each lug 19 for receiving a fastening screw. The lamp holder of this embodiment is in particular adapted to a vanity fixture.

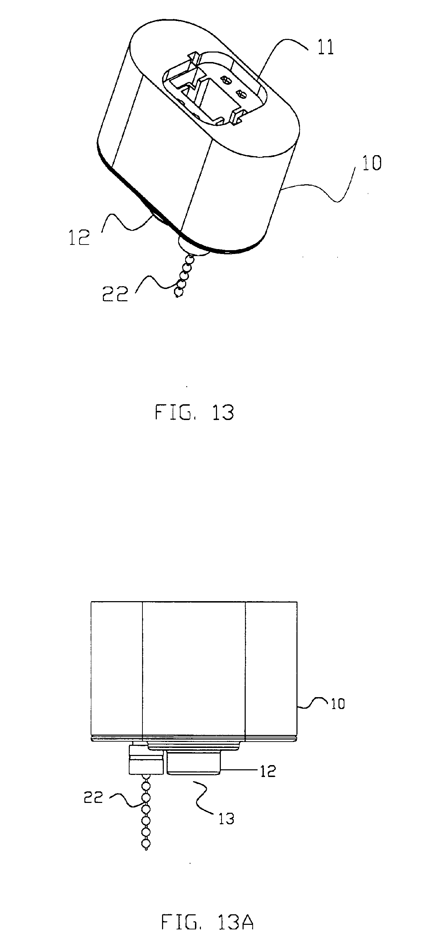

A lamp holder constructed according to a tenth embodiment of the present invention is shown in FIG. 13 and FIG. 13A, wherein the hollow main body 10 is of a central flat portion with two arcuate end portions, and the socket 11 is disposed in the top of the flat portion of said main body 10. The lamp holder further comprises an annular protrusion 12 extending from the bottom end of the flat portion of said main body 10, and a threaded hole 13 provided in a center of said annular protrusion 12 similar to that shown in FIG. 1. A switch is provided internally in the ballast circuit in this embodiment, and a pull chain 22 is provided to control the on/off of the switch.

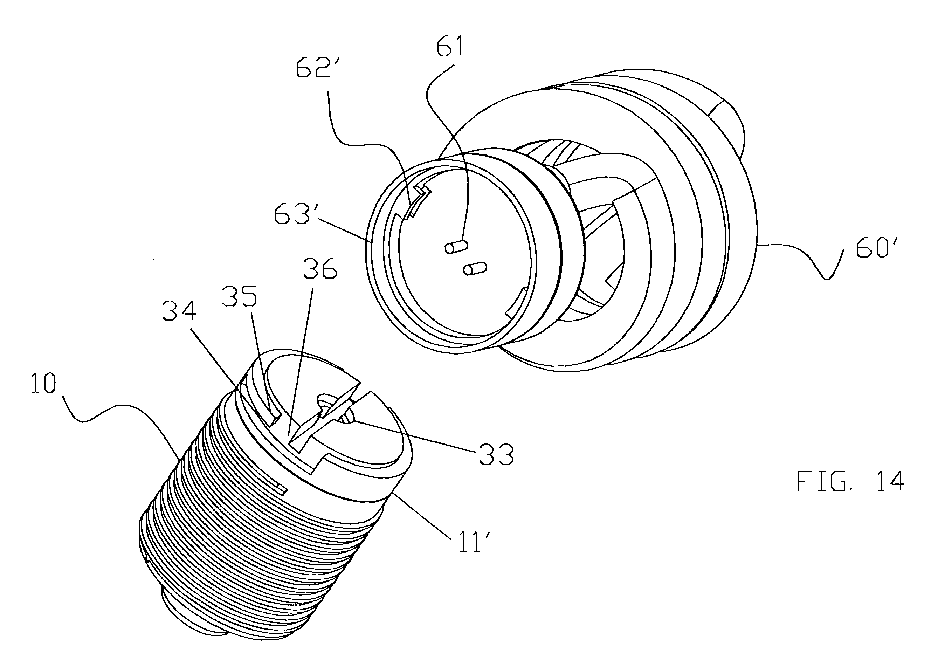

A lighting kit constructed according to an eleventh embodiment of the present invention is shown in FIG. 14, which comprises a compact fluorescent lamp 60' and a lamp holder. Said lamp holder of this embodiment is similar in construction to the lamp holder shown in FIG. 11, except that the lamp sockets thereof are different. The lamp socket 11' of this embodiment comprises a pair of grooves 33 provided on the cylindrical end of said main body 10; two receiving channels 34 provided on a circumference of said cylindrical end of said main body 10; and two blocking members 35. Said pair of grooves 33 are in the form of two separate circumferential sections of a circle co-axial with said cylindrical end of said main body 10. Said two receiving channels 34 are partially blocked by said two blocking members 35 to form two accesses 36 in the longitudinal direction. The two accesses 36 are opposite to each other, and each of the receiving channels 34 has a portion thereof extending clockwise from the respective access 36. Said compact fluorescent lamp 60' has a pair of pin electrodes 61 on a base thereof, and a pair of projections 62' on an annular upright wall 63' surrounding the base. Said projections 62' do not contact the base, so that there is a distance between the projection 62' and the base of the compact fluorescent lamp 60'. Said pair of pin electrodes 61 of said compact fluorescent lamp are received in said pair of grooves 33 of the lamp socket 11, and said pair of projections 62' of said compact fluorescent lamp are received in said two receiving channels 34 through said two accesses 36 at the same time, so that said compact fluorescent lamp 60' is able to be rotated clockwise to a position where said pair of projections 62' are locked by said two blocking members 35 axially, and then is able to be rotated counterclockwise to unlock said pair of projections 62' from said locking members 35. In this embodiment, the socket 11' is completely covered by the base and the annular upright wall 63' of the compact fluorescent lamp 60', so that water is not able to migrate into the gap between the compact fluorescent lamp 60' and the socket 11' under normal use conditions.

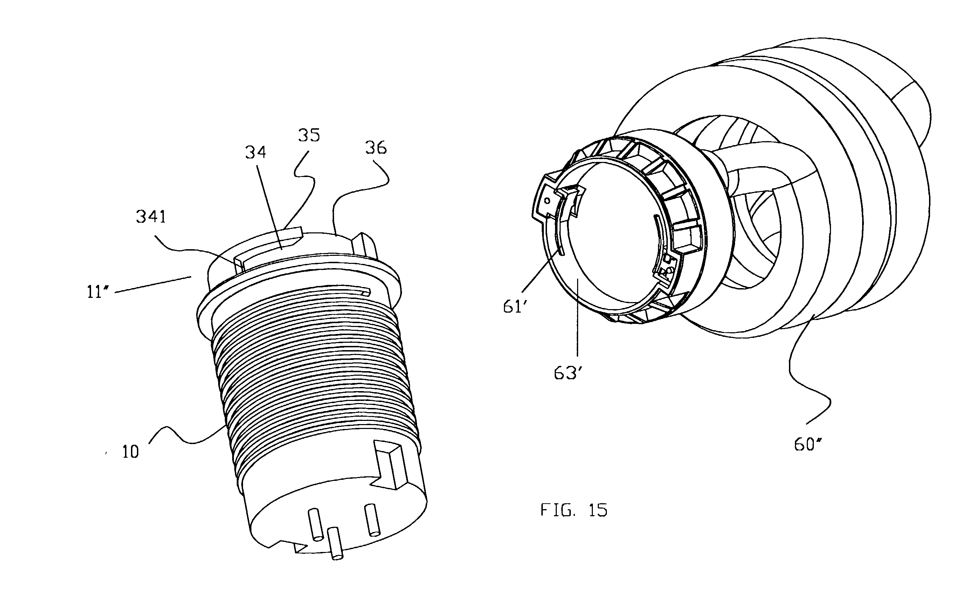

A lighting kit constructed according to a twelfth embodiment of the present invention is shown in FIG. 15, which comprises a compact fluorescent lamp 60" and a lamp holder. The lamp holder of this embodiment has a hollow main body 10 is of a cylindrical construction, and the socket 11" is disposed in one end of said cylindrical construction of said main body 10. A plurality of threads 18 are formed on an outer surface of said cylindrical construction of said main body 10, so that the lamp holder can be threadably engaged with a post and/or a housing of a lighting fixture. The lamp socket 11" of this embodiment comprises two receiving channels 34 provided on a circumference of said cylindrical end of said main body 10; and two blocking members 35. Said two receiving channels 34 are partially blocked by said two blocking members 35 to form two accesses 36 in the longitudinal direction. The two accesses 36 are opposite to each other, and each of the receiving channels 34 has a portion thereof extending clockwise from the respective access 36. The respective receiving channel 34 stops at a wall, and a slot 341 is formed on the wall, in which a conducting piece (not shown in the drawings) is mounted for electrically connecting an electrode of said compact fluorescent lamp 60" to the ballast circuit inside the hollow main body 10. Said compact fluorescent lamp 60" has a pair of electrodes on an annular upright wall 63' surrounding a base of said compact fluorescent lamp 60". Each of said pair of electrodes comprises an arcuate piece 61' below the base and extending counterclockwise, so that there are a distance between the arcuate piece 61' and the base, and a gap between the arcuate piece 61' and annular upright wall 63' of the compact fluorescent lamp 60". The arcuate pieces 61' of said pair of electrodes are received in said two receiving channels 34 through said two accesses 36, so that said compact fluorescent lamp 60" is able to be rotated clockwise to a position where the arcuate pieces 61' are received in the slots 341, whereby said compact fluorescent lamp 60" is locked onto the socket 11". By rotating said compact fluorescent lamp 60" counterclockwise, said compact fluorescent lamp 60" can be unlocked from said socket 11". In this embodiment, the socket 11" is completely covered by the base and the annular upright wall 63' of the compact fluorescent lamp 60", so that water is not able to migrate into the gap between the compact fluorescent lamp 60" and the socket 11' under normal use conditions.

The presently disclosed embodiments are therefore considered in all respects to be illustrative and not restrictive. The scope of the invention is indicated by the appended claims rather than the foregoing description, and all changes that come within the meaning and range of equivalents thereof are intended to be embraced therein.

## Claims

1. A lamp holder comprising a hollow main body; a ballast circuit disposed in said hollow main body; a socket for holding a compact fluorescent lamp on to said hollow main body; and a fastening mechanism for non-electrically fastening said hollow main body to a lighting fixture, wall, or ceiling, wherein said ballast circuit is electrically connected with electrodes of said compact fluorescent lamp when said compact fluorescent lamp is held on by said socket.

2. The lamp holder as defined in claim 1, wherein said hollow main body comprises a cylindrical construction; wherein said socket comprises a hollow columnar body disposed at one end of said cylindrical construction, so that an annular offset is formed at an interface between said cylindrical construction and said hollow columnar body of said socket; wherein said hollow columnar body is provided with a plurality of threads on its outer surface; whereby a shade or a shield of said lighting fixture are mounted to said annular offset or to said plurality of threads.

3. The lamp holder as defined in claim 2, wherein said fastening mechanism comprises said annular offset and said plurality of threads.

4. The lamp holder as defined in claim 1, wherein said hollow main body comprises a first cylindrical construction, and said socket comprises a second cylindrical construction disposed at one end of said first cylindrical construction; wherein said second cylindrical construction has a diameter smaller than that of said first cylindrical construction, so that an annular offset is formed at an interface between said first and second cylindrical constructions; wherein said fastening mechanism comprises a plurality of lugs extending radially from periphery of another end of said first cylindrical construction, and a through hole provided at each one of said plurality of lugs for receiving a screw to be threaded into a wall or ceiling.

5. The lamp holder as defined in claim 1, wherein said socket is disposed in one end of said main body, and said fastening mechanism comprises an annular protrusion extending from another end of said main body, and an axial hole provided at a center of said annular protrusion; wherein said annular protrusion is adapted to be received in a supporting stem of said lighting fixture or said axial hole is adapted to receive said supporting stem of said lighting fixture.

6. The lamp holder as defined in claim 1, wherein said hollow main body comprises a cylindrical construction, and said socket is disposed in one end of said cylindrical construction of said main body; wherein said fastening mechanism comprises a plurality of threads formed on an outer surface of said cylindrical construction of said main body, which are adapted to be threadably connected to said lighting fixture.

7. The lamp holder as defined in claim 1, wherein said hollow main body is provided with a smooth back surface to facilitate an attachment of said main body to a wall or ceiling, wherein said fastening mechanism comprises one or more fastening pieces which are extended from an edge or edges of said back surface of said main body such that said fastening pieces are parallel to said back surface, wherein each one of said one or more fastening pieces are provided with a mounting opening.

8. The lamp holder as defined in claim 1, wherein said hollow main body is of a square shape; wherein said socket is disposed in one side of said square main body; wherein said fastening mechanism comprises a locating body which is disposed in a top of said square main body and is provided with a locating hole perpendicular to the top of said square main body, said fastening mechanism further comprising a fastening screw which is movably fastened with said locating body such that said fastening screw is parallel to the top of said square main body, and that said fastening screw can be driven to move into and out of said locating hole.

9. The lamp holder as defined in claim 1, wherein said hollow main body is a flat square body; wherein said socket is disposed in an underside of said flat square main body; wherein said fastening mechanism comprises a locating hole which is disposed in a top of said flat square main body.

10. The lamp holder as defined in claim 1, wherein said ballast circuit further comprises a power source switch for connecting or disconnecting said ballast circuit with a power source.

11. The lamp holder as defined in claim 1, wherein said socket comprises an aperture for receiving a protrusion body on a base of said compact fluorescent lamp and a locking means for engaging with a cooperative locking means of said compact fluorescent lamp.

12. The lamp holder as defined in claim 11, where the locking means comprises bushing electrodes connected to said ballast circuit and mounted in holes provided adjacent to said aperture of said socket, wherein said bushing electrodes are adapted to be plugged by pin electrodes formed on the base of the compact fluorescent lamp.

13. The lamp holder as defined in claim 1, wherein said main body comprises a cylindrical construction, and said socket comprises:
a pair of grooves provided on one end of said cylindrical construction for receiving a pair of pin electrodes of said compact fluorescent lamp, wherein said pair of grooves are in the form of two separate circumferential sections of a circle co-axial with said cylindrical construction of said main body;
two receiving channels provided on a circumference of said one end of said cylindrical construction for receiving a pair of projections of said compact fluorescent lamp; and
two blocking members adjacent to said two receiving channels, so that said two receiving channels are partially blocked by said two blocking members to form two accesses in the longitudinal direction at said one end of said cylindrical construction, wherein said two accesses are opposite to each other, and each of the receiving channels has a portion thereof extending clockwise from the respective access, so that said pair of pin electrodes of said compact fluorescent lamp are able to be received in said pair of grooves, and said pair of projections of said compact fluorescent lamp are able to be received in said two receiving channels through said two accesses at the same time, then said compact fluorescent lamp is able to be rotated to a position where said pair of projections are locked by said two blocking members axially.

14. The lamp holder as defined in claim 1, wherein said main body comprises a cylindrical construction, and said socket comprises:
two receiving channels provided on a circumference of one end of said cylindrical construction;
two blocking members adjacent to said two receiving channels, so that said two receiving channels are partially blocked by said two blocking members to form two accesses in the longitudinal direction, wherein said two accesses are opposite to each other, and each of the receiving channels has a portion thereof extending clockwise from the respective access, and stops at a wall; and
a slot formed on the wall of the respective receiving channel for receiving a respective electrode of compact fluorescent lamp.

15. The lamp holder as defined in claims 2, 6, 13 or 14, wherein said fastening mechanism comprises an annular protrusion extending coaxially from another end of said cylindrical construction of said main body, and an axial hole provided at a center of said annular protrusion; wherein said annular protrusion is adapted to be received in a supporting stem of said lighting fixture or said axial hole is adapted to receive said supporting stem of said lighting fixture.

16. The lamp holder as defined in claims 13 or 14, wherein said fastening mechanism comprises a plurality of threads formed on an outer surface of said cylindrical construction of said main body, which are adapted to be threadably connected to said lighting fixture.

17. The lamp holder as defined in claim 16, wherein said fastening mechanism further comprises an annular protrusion extending coaxially from another end of said cylindrical construction of said main body, and an axial hole provided at a center of said annular protrusion; wherein said annular protrusion is adapted to be received in a supporting stem of said lighting fixture or said axial hole is adapted to receive said supporting stem of said lighting fixture.

18. The lamp holder as defined in claim 15, wherein said axial hole is a threaded hole.

19. A lighting kit comprising the lamp holder and the compact fluorescent lamp as defined in claim 1.

20. A lighting kit comprising the lamp holder and the compact fluorescent lamp as defined in claim 11.

21. The lighting kit as defined in claim 20, where said locking means of the lamp holder comprises bushing electrodes connected to said ballast circuit and mounted in holes provided adjacent to said aperture of said socket, and said cooperative locking means of said compact fluorescent lamp comprises pin electrodes formed on the base of said compact fluorescent lamp, wherein said bushing electrodes are adapted to be plugged by said ping electrodes.

22. A lighting kit comprising the lamp holder and the compact fluorescent lamp as defined in claim 13, wherein said compact fluorescent lamp comprises an annular upright wall surrounding said base of said compact fluorescent lamp, and said annular upright wall has an inside diameter slightly greater than that of said one end of said cylindrical construction of said main body, wherein said pair of projections are located on said annular upright wall of said compact fluorescent lamp and opposite to each other, and said pair of projections do not contact said base, so that there are two gaps between said pair of projections and said base of said compact fluorescent lamp for said two blocking members to pass through.

23. A lighting kit comprising the lamp holder and the compact fluorescent lamp as defined in claim 14, wherein said compact fluorescent lamp comprises a base, an annular upright wall surrounding said base, and a pair of electrodes on said annular upright wall, wherein
said annular upright wall has an inside diameter slightly greater than that of said one end of said cylindrical construction of said main body;
each of said pair of electrodes comprises an arcuate piece below said base and extending counterclockwise, wherein there are a distance between the arcuate piece and the base, and a gap between the arcuate piece and annular upright wall of the compact fluorescent lamp, wherein said arcuate pieces of said pair of electrodes are adapted to be received in said two receiving channels through said two accesses of said socket, so that said compact fluorescent lamp is able to be rotated clockwise to a position where the arcuate pieces of said pair of electrodes are received in said slots of said two receiving channels, whereby said compact fluorescent lamp is locked onto said socket.

24. The lighting kit as defined in claims 22 or 23, wherein said fastening mechanism comprises an annular protrusion extending coaxially from another end of said cylindrical construction of said main body, and an axial hole provided at a center of said annular protrusion; wherein said annular protrusion is adapted to be received in a supporting stem of said lighting fixture or said axial hole is adapted to receive said supporting stem of said lighting fixture.

25. The lighting kit as defined in claims 22 or 23, wherein said fastening mechanism comprises a plurality of threads formed on an outer surface of said cylindrical construction of said main body, which are adapted to be threadably connected to said lighting fixture.

26. The lighting kit as defined in claim 24, wherein said fastening mechanism further comprises a plurality of threads formed on an outer surface of said cylindrical construction of said main body, which are adapted to be threadably connected to said lighting fixture.

27. The lighting kit as defined in claim 24, wherein said axial hole is a threaded hole.
